# EUROPÄISCHE PATENTSCHRIFT

(11) **EP 1 076 026 B1**
(45) Veröffentlichungstag und Bekanntmachung des Hinweises auf die Patenterteilung: **07.12.2005**
(21) Anmeldenummer: 00114471.6
(22) Anmeldetag: 06.07.2000
(51) Int. Cl.: B65H 19/10

(54) **Spliceband mit Fixierhilfe sowie dessen Verwendung**
Splicing tape with fixing aid and its use
Ruban de raccordement avec une aide de fixation et son utilisation

(30) Priorität: 17.07.1999 DE 19933669; 24.11.1999 DE 19956442
(43) Veröffentlichungstag der Anmeldung: 14.02.2001
(73) Patentinhaber: tesa AG, 20253 Hamburg (DE)
(72) Erfinder: Gleichenhagen, Peter, Dr., 22417 Hamburg (DE); Müller, Annemarie, 22459 Hamburg (DE)

(56) Entgegenhaltungen:
- GB-A- 2 294 235
- US-A- 5 901 919

## Beschreibung

Die Erfindung betrifft die Verwendung spezieller Haftklebebänder für den fliegenden Rollenwechsel, wie er z.B. in Papierveredelungsmaschinen oder Druckmaschinen mit Papierbahnen oder dergleichen durchgeführt wird.

Dieses Verfahren ermöglicht beim Ballenwechsel ein Spleißen ohne Abstoppen der Maschine. Dabei wird, vereinfacht beschrieben, der neu einzuziehende Ballen an seinem Bahnanfang mit einer haftklebenden Fläche ausgerüstet, die, nach der Beschleunigung des Ballens auf die Bahngeschwindigkeit der Maschine, gegen das Ende der Bahn des auslaufenden Ballens geführt wird, mit diesem verklebt und dadurch den Bahnanfang des einzuwechselnden Ballens mit der auslaufenden Bahn in die Maschine einzieht. Zur Herstellung der erforderlichen Haftklebeflächen werden Haftklebebänder eingesetzt. Beim fliegenden Rollenwechsel sind es wahlweise beidseitig haftklebende Bänder, mit denen die Bahnen überlappend verklebt werden (Bahn über Bahn) oder häufig auch ausreichend breite einseitig haftklebrig ausgerüstete Spleiß-Bänder (Stoß an Stoß).

Das Prinzip hat sich seit Jahrzehnten in der Praxis bewährt, die technische Durchführung mußte aber laufend an die gesteigerten Bahngeschwindigkeiten und Bahnbreiten der Maschinen angepaßt werden. So wurden innerhalb dreier Jahrzehnte die Bahngeschwindigkeiten von ca. 600m/min auf heute bis zu 2500 m/min und die Maschinenbreiten von ca. 2 m auf heute ca. 8 m gesteigert. Die damit verbundenen höheren Krafteinwirkungen auf die Spleiße erfordern selbst bei etwas herabgesetzter Bahngeschwindigkeit während des Spleißvorgangs eine Verbesserung der Klebemassen und eine sorgfältig ausgeklügelte Spleiß-Vorbereitung. Ein Maschinenstopp wegen Bahnabrisses bei derartigen Geschwindigkeiten und Bahnbreiten verursacht sehr hohe Verlustkosten (Ausfallzeit und Ausschuß während der Anfahrphase).

Besonders viel Zeit und Sorgfalt bei der Spleiß-Vorbereitung benötigt die Fixierung des Bahnanfangs am einzuwechselnden Ballen. Vor dem Spleißen muß nämlich der neue Ballen auf eine Umfanggeschwindigkeit gebracht werden, die ungefähr der Bahngeschwindigkeit entspricht. Dabei muß der Bahnanfang, der die für die Spleißung aufgebrachte Haftklebefläche trägt, durch Fixierhilfen fest auf der Oberfläche des Ballens haften. Bereits leichtes Flattern dieser Bahnoberfläche behindert bei den hohen Geschwindigkeiten ein vollflächiges Verkleben mit der auslaufenden Bahn und führt zum Abriss. Sofort nach Ausbildung der Verklebung hingegen müssen die Fixierhilfen gelöst werden, damit sich der Bahnanfang von der Ballenoberfläche trennen kann. Als solche Fixierhilfen werden z.B. haftklebende Papieretiketten benutzt, die durch Wahl des Papiers und/ oder mittels spezieller Geometrie eine mehr oder weniger definierte Reißfestigkeit besitzen und in bestimmter Anzahl von Hand so auf den Ballen geklebt werden, daß der Bahnanfang auf die darunter liegende Fläche der folgenden Windung fixiert wird.. Unmittelbar nach dem Spleißen der beiden Bahnen werden durch den Bahnzug die Fixierhilfen zerrissen.

Für eine zügige Spleiß-Vorbereitung und um die zeitraubende und nicht immer zuverlässige Fixierung von Hand zu vermeiden, sind haftklebende Spleißbänder entwickelt worden, die neben den für die Spleißung vorgesehenen Klebeflächen die Fixierhilfe für den Bahnanfang integriert enthalten. Diese Klebebänder besitzen, in Längsrichtung aufgeteilt, auf ihrem Trägermaterial zwei streifenartige Zonen, wobei die eine doppelseitig oder einseitig haftklebende Zone für den Spleißvorgang ausgerüstet ist und auf (doppelseitig haftklebend) bzw. anteilig unter (einseitig haftklebend) den Bahnanfang des einzuwechselnden Ballens geklebt wird Die zweite ebenfalls haftklebrige Zone, die auf dem Klebeband mit mehr oder weniger Abstand neben der ersten Zone angeordnet ist, dient mit ihrer an der Unterseite des Klebebandes liegenden Klebefläche der Fixierung auf der folgenden Windung, die die Ballenoberfläche bildet.

In WO 95/29115 wird ein Spleißband beschrieben, bei dem die integrierte Fixierhilfe mittels einer schwachklebenden, reversibel haftenden Klebemasse auf der Ballenoberfläche befestigt wird. Die reversibel haftende Beschichtung soll gewährleisten, daß beim Spleißvorgang die Fixierung leicht und ohne haftklebende Rückstände auf der Ballenoberfläche zu hinterlassen gelöst wird. Diese Verfahrensweise hat sich in der Praxis nicht bewährt, da die Festigkeitswerte der reversiblen Verklebung von der Beschaffenheit der zu veredelnden Papiersorte abhängen und damit nicht konstant sind. Außerdem verbleibt die Haftklebefläche der Fixierhilfe unabgedeckt auf der Unterseite der Papierbahn und wird beim Veredelungsprozeß über die heißen Trockenzylinder der Papiermaschine geführt, wobei haftklebende Partikel abgelagert werden, die das Papier verunreinigen, Trockenfilz- und Siebe verschmutzen und in größerer Ansammlung durch Ankleben der Bahn an Trockenzylindern Abrisse verursachen können.

In ähnlicher Weise wird in DE 40 33 900 die Bahnfixierung mit einer schwach haftklebenden Sektion in Verbindung mit der Spleißzone durchgeführt.

In 0 418 527 A2 wird ein Spleißverfahren speziell für einen fliegenden Ballenwechsel in einer Druckmaschine beschrieben. Hierbei wird die integrierte, haftklebend ausgerüstete Fixierhilfe durch eine eingebaute Sollbruchstelle nach der Verklebung der Bahnen von der Splice-Zone getrennt. Als Sollbruchstelle dient eine in Längsrichtung ausgeführte Perforierung des Trägermaterials im Klebeband zwischen den Haftkleberschichten für die Splice- und Fixier-Zone. Vorteilhaft ist bei diesem Verfahren, daß die haftklebenden Flächen nach dem Spleißen von nichtklebenden Substraten abgedeckt bleiben und damit keine haftklebenden Oberflächen durch die Druckmaschine oder dergleichen geführt werden. Nachteilig hingegen ist die wenig definierte Bruchkraft der Sollbruchstelle in Form einer Perforation.. Die Festigkeitsschwankungen können hierbei erheblich sein. Außerdem erfolgt die Auftrennung über die einzelnen Perforierungen ruckartig nach Art eines Reißverschlusses. Wegen der dabei auftretenden einzelnen Zugkraftspitzen kann bereits bei wenigen Schwächungen einzelner Perforationszwischenräume der gesamte Verbund vorzeitig reißverschlußartig aufreißen. Für Druckmaschinen mit Bahngeschwindigkeiten um ca. 800 m/min mag dieses Prinzip hinreichen, bei den wesentlich schneller laufenden Papierveredelungsmaschinen sind verbesserte Problemlösungen wünschenswert.

In US 5,702,555 wird ein Verfahren zur definiert lösbaren Fixierung von Bahnenden auf Ballenoberflächen beschrieben, bei dem ein beidseitig haftklebendes Band verwendet wird, das zwischen den haftklebenden Beschichtungen einen leicht spaltbaren Papierträger enthält, der als Sollbruchzone dient. Beim Lösen der Fixierung verbleiben die Haftklebeschichten auf der Papierbahn, der zwischen ihnen positionierte Papierträger spaltet mehr oder weniger mittig auf und löst dadurch die Verklebung zwischen Bahnanfang und darunter liegender Windung. Die Haftklebeschichten bleiben hierbei durch die beiden bei der Spaltung entstandenen dünneren Papierbahnen abgedeckt, so daß keine haftklebenden Flächen durch die Maschine geführt werden.

In DE 196 28 317 A 1 und DE 196 32 689 A1 sind Haftklebebänder beschrieben, die speziell für den fliegenden Rollenwechsel in schnell laufenden Papiermaschinen konstruiert sind und besonders leicht spaltendes Papier als Zwischenträgermaterial für eine integrierte Fixierhilfe des Bahnanfangs enthalten.

In der WO 99/46196 wird u.a. ein repulpierbares Spliceband mit integrierter Fixierhilfe beschrieben, bei dem in die mehrlagige Fixierhilfe eine wasserlösliche Kunstoffschicht in Kontakt mit einer Trennschicht aus Silikon oder fluororganischen Verbindungen als Sollbruchstelle eingebaut ist. Die Spaltkraft wird über die Beschichtungsstärke und Trennqualität der Trennmittel eingestellt. Nachteilig ist bei dieser Fixierhilfe das unerwünschte Einbringen derartig stark wirksamer oberflächenaktiver Mittel in das Papierrecycling. Außerdem erfordert die Einstellung der Spaltkraft in den gewünschten engen Toleranzen mittels Änderungen in den minimalen Schichtstärken derartiger Trennmnittel einen hohen technologischen Aufwand.

Zusammenfassend wird ersichtlich, daß der fliegende Ballenwechsel an modernen Beschichtungsanlagen ein komplexer Vorgang ist, bei dem wegen der hohen Geschwindigkeiten und großen zu beschleunigenden Massen im Bereich von Tonnen bereits marginale Fehler oder Schwachstellen dieses Prozesses zu erheblichen Verlusten führen können. Üblicherweise werden in den Papierfabriken aus diesem Grunde Statistiken über die Versager-Quote beim Spleißen geführt. Dementsprechend besteht ein Bedarf an weiteren Optimierungen. Wesentlich ist hierfür die Minimierung von Zugspannungspitzen während des Spleißens. Deshalb sind momentane, ruckartige Beschleunigungskräfte möglichst zu vermeiden. Problematisch ist dieses beim schlagartigen Lösen der Fixierhilfen für den Bahnanfang während der Spleißformung. Die Auftrennung der Fixierhilfen, die den Bahnanfang am einzuwechselnden Ballen gegen das Unterströmen von Luft oder fahnenartiges Ablösen beim Drehbeschleunigen auf Bahngeschwindigkeit mit verhältnismäßig hohen Haltekräften sichern müssen, erzeugt eine deutliche Spannungsspitze in der Papierbahn. Diese zu minimieren ist Aufgabe der Erfindung, damit 1. der in unmittelbarer Nähe sich formende Spleiß nicht unnötig belastet wird und 2. die Papieroberfläche, auf der die Fixierhilfe befestigt ist, beim Sprengen der Sollbruchstelle nicht auf- oder eingerissen wird.. Besonders bei der Fertigung dünnerer, empfindlicher Papiere müssen diese Spannungsspitzen möglichst gering gehalten werden, wobei andererseits die zuverlässige Fixierung des Bahnanfangs auf dem Ballen weiterhin verhältnismäßig hohe Festigkeiten erfordert. Wegen dieser Anforderungen muß die Sollbruchstelle in möglichst engen, definierten Toleranzen funktionstüchtig gestaltet werden.

Wie in der Einleitung beschrieben, ist die Erzeugung von Sollbruchstellen mittels mehr oder weniger leicht spaltbarer Papiere, deren Spaltfestigkeit im wesentlichen durch einen hohen Anteil an Kurzfasem und Füllstoffen herabgesetzt ist, günstiger zu bewerten als die Verwendung von reversibel klebenden Haftklebebeschichtungen.

Nachteilig ist bei der Papierspaltung in der Dicke des Papiers (Z-Richtung), daß eine niedrige Spaltkraft schwierig einzustellen ist und nicht in engen Grenzen festgelegt werden kann. Dementsprechend gelingt eine enge Auslegung der Sollbruchtoleranzen nicht. Außerdem ist Papier, das zur Verringerung der Spaltfestigkeit in Z-Richtung einen hohen Anteil an Füllstoff und Kurzfasern enthält, sehr spröde.. Dies führt zu einer spröden, unelastischen und ruckartigen Spaltung, so daß derartige Sollbruchstellen nicht elastisch "soft" spalten und keinen Beitrag zu einem Abbau von momentanen Belastungsspitzen im Spleißvorgang liefern.

Als nächster Stand der Technik ist die US-5,901,919 A (zur oben genannten DE 196 28 317 A1) anzusehen. Diese beschreibt ein Klebeband für den fliegenden Rollenwechsel in Papierveredelungsmaschinen oder dergleichen, mit einem Papierträger und einer wasserlöslichen Selbstklebemasse. Ein Teil der Rückseite des Papierträgers ist mit einem doppelseitig klebenden Klebeband ausgerüstet, welches seinerseits einen spleißfreudigen Papierträger aufweist, der beidseits mit wasserlöslicher Selbstklebemasse ausgerüstet ist.

Auch die GB 2 294 235 A beschreibt ein Klebeband für den fliegenden Rollenwechsel mit einem aus zwei Schichten kaschierten Kleber, doch weist dieser keine repulpierbaren Eigenschaften auf. Als einzig offenbarte Kaschiermasse wird hier ein UV-härtender Silikon-Trennlack eingesetzt. Auf Anforderungen für eventuelle Recyclingprozesse wird in dieser Schrift nicht hingewiesen. Ausgehend von der US 5,901,919 A stellt sich daher die objektive Aufgabe, eine Fixierhilfe für ein Spleißband für den fliegenden Rollenwechsel anzubieten, wobei das mit der Fixierhilfe ausgestaltete Spleißband dünn sein soll, die Fixierhilfe variierbare Spaltkräfte, anpassbar an den jeweiligen Anwendungsbereich, aufweist und wobei weiterhin keines der Bestandteile des Spleißbandes den einer Papierverarbeitung nachfolgenden Recyclingprozess stört.

Für den Fachmann überraschend und nicht vorhersehbar kann die Aufgabe durch Verwendung einer Fixierhilfe gelöst werden, wie sie im Hauptanspruch dargestellt ist.

### Beschreibung der Erfindung

Die Erfindung lehrt die Verwendung eines verbesserten Haftklebebandes für die Durchführung fliegender Rollenwechsel mit integrierter Fixierhilfe für den Bahnanfang des einzuwechselnden Ballens, wobei die geschilderten Mängel nicht oder zumindest nicht in dem Maße eintreten. Wesentlich ist hierzu der Einbau einer leicht und "soft" spaltbaren Sollbruchzone mit engen Bruchtoleranzen zur Ablösung der Fixierhilfe von der Ballenoberfläche.

Entsprechend betrifft die Erfindung die Verwendung einer Fixierhilfe an der Unterseite eines Splicebandes zum Ausrüsten eines Ballens für den fliegenden Rollenwechsel (flying splice), wobei
a) das Spliceband mittels der Fixierhilfe an der zweitobersten Bahn eines gewickelten Ballens angeklebt wird,
b) das Spliceband zugleich an den Anfang der obersten Bahn des geweickelten Ballens derart angeklebt wird, dass zumindest ein Teil der klebend ausgerüsteten Oberseite des Splicebandes, die der Fixierhilfe gegenüber liegt, für die verklebende Ankopplung an eine schnell laufende Bahn eines anderen, abrollenden Ballens offen liegt, wobei
c) die Fixierhilfe an der Unterseite des Splicebandes angeklebt ist, und
d) die Fixierhilfe aus einem Trägermaterial besteht, das aus zwei zusammenkaschierten flächigen Materialien gebildet ist, wobei
   d1) die Kaschierung eine Sollbruchstelle bildet,
   d2) die Kaschierung durch eine wasserbasierte Kaschiermasse bewirkt wird, die neben einem Binder schwach trennwirksame silikonfreie Zusätze enthält,
   d3) die Fixierhilfe auf ihrer Unterseite haftklebend ausgerüstet ist.

Hierzu werden zwei Bahnen, insbesondere zwei Papierbahnen miteinander kaschiert. Die Kaschierung wird hierbei so ausgeführt, daß sie die gewünschte Sollbruchzone ergibt. Dies kann man durch Verwendung einer Kaschiermasse erreichen, die neben einem Binder schwach trennwirksame silikonfreie und bei Bedarf auch elastifizierende Zusätze enthält. Dieser Verbund kann dann mit Haftklebemasse beschichtet werden und als integrierte Fixierhilfe für die Ausrüstung eines Haftklebebandes dienen. Hierbei sind eine Vielzahl von Ausführungsformen möglich und es können mit Einbeziehung von Trennpapieren Rollenware von Spleiß-Haftklebebändem mit einseitig haftklebend ausgerüsteten Spleißverklebungszonen oder beidseitig haftklebend ausgerüsteten Spleißverklebungszonen hergestellt werden. Dabei wird die Fixierhilfe auf der Gegenseite der für die Spleißung vorgesehenen Haftklebezone vorgesehen, insbesondere wie in DE 196 28 317 A1 beschrieben, vorzugsweise wie dort in Fig. 1 beschrieben.

Bei der Auswahl geeigneter Kaschiermassen ist darauf zu achten, daß die getrockneten Filme auch bei höheren Temperaturen keine Haftkraft besitzen, damit die nach der Spaltung freigelegten Flächen keine Maschinenteile oder Produktionsware verschmutzen. Für den Einsatz in Papier- und Druckmaschinen ist es wünschenswert, daß alle Bestandteile des Spleißbandes das Recycling von Papieren nicht stören . Bei der Weiterverarbeitung herausgeschnittene Spleißzonen können dann problemlos recycliert werden. Daher sind wasserbasierte Zusammensetzungen der Kaschiermasse, die bei der Papierherstellung übliche Hilfsstoffe enthalten, besonders vorteilhaft. Als Binder können z.B. modifizierte Stärken verwendet werden, oder Bindemittel wie sie für Naßklebbänder seit langem in Gebrauch sind. Als Trennmittel können z.B. Talkum, Stearylderivate wie Ca-Stearat oder Dispersionen von polymeren Trennmitteln, wie z.B. Dispersionen auf Basis von Copolymeren aus Stearylmethacrylat oder Stearylderivaten der Maleinsäure mit Styrol, eingesetzt werden. Als Elastifiziermittel können z.B. wasserlösliche Polyglykole dienen. Insbesondere wäßrige Zubereitungen mit 10 - 90 Gew.% Bindemittel und 10 - 90 Gew.% Trennmittel sowie bis 60% Elastifiziermittel können als Kaschiermasse verwendet werden. Bevorzugt werden als Bindemittel Stärkederivate, z.B. anionische Kartoffelstärke, in Anteilen von 30 - 70 Gew.% eingesetzt. Als Trennmittel werden vorzugsweise Talkum, Ca-Stearat und/oder trennwirksame Copolymere mit Stearylgruppen in Anteilen von 30 - 80 Gew. % verwendet. Zur Elastifizierung haben sich Polypropylen- oder Polyethylenglykole vorzugsweise in Mengen zwischen 0 - 15 Gew.% als gut geeignet erwiesen. Dabei werden die höher molekularen, bei Raumtemperatur festen Produkte vorrangig verwendet. Weitere in größeren Anteilen gut einsetzbare Elastifizierungsmittel sind Gummi Arabicum und Kunststoffe mit ähnlichem Eigenschaftsprofil. Die Kaschiermasse wird bevorzugt mit einem für wäßrige Dispersionen geeigneten Auftragswerk auf einen Papierträger oder dergleichen beschichtet und in nassem Zustand mit einem zweiten Papierträger oder dergleichen eingedeckt und anschließend getrocknet. Bei Bedarf können die in der Papierherstellung üblichen Maßnahmen wie Rückbefeuchtung, Glättung und Egalisierung des erzeugten Verbunds eingesetzt werden. Die Schichtstärke der Kaschiermasse liegt nach dem Trocknen vorzugsweise in einem Bereich von 5 -20 g/qm.

Eine weitere bevorzugte Variante zur Erzeugung der gewünschten Sollbruchzone besteht in der partiellen nicht vollflächigen Kaschierung zweier Trägerbahnen. Hierzu wird z.B. eine Papierbahn mittels Rotationssiebdruck mit diskreten Arealen von Kaschiermasse beschichtet und naß mit der zweiten Trägerbahn zusammenkaschiert und getrocknet. Abstand und Durchmesser sowie Schichtdicke der Areale werden durch das Siebdesign vorgegeben. Bevorzugt werden Siebe mit 14 -100 mesh und 7% - 60% Durchlass verwendet. Die Beschichtungsmenge an getrockneter Kaschiermasse wird im Bereich 5 - 25 g/qm eingestellt.

Für den Siebdruck werden höher viskose pastenartige , nicht schäumende wässrige Zubereitungen verwendet, deren Feststoffgehalt z. B. aus anionischer Kartoffelstärke besteht. Elastifizierende Zusätze wie Polypropylen-oder Polyethylenglykole und/ oder Trennmittel können in Mengen, die mit dem Hauptbestandteil verträglich sind, mitverwendet werden. Die Einstellung der Spaltkraft wird neben dem Anteil an Trennmittel durch Siebdesign und Feststoffkonzentration vorgegeben.

Zur Erzielung eines sauberen, nicht verschmierten Druckbildes muß der elastische Anteil im Fließverhalten der wässrigen Zubereitung gering gehalten werden, damit ein Fadenziehen vermieden wird. Dies kann z.B. durch Zusätze von Talkum oder geringen Mengen feinsteiligem Kieselgels oder anderen Verdickern erreicht werden.

Durch eine unterschiedliche Verteilung und/oder Göße der Kaschiermassen-Areale in der Sollbruchzone können innerhalb dieser Zone variierende Spaltkräfte eingestellt werden. Beim Spalten der Fixierhilfe während des Spleißvorgangs kann dadurch die Spaltkraft z.B.zu Beginn im Randbereich der Fixierzone niedrig gehalten werde, beim Fortschreiten des Ablösevorgangs zur Mitte hin durch eine anwachsende Dichte oder Größe von Haftstellen stetig anwachsen und gegen Ende der Spaltung durch entsprechende Verringerung der Haftpunkte wieder abfallen. Auf diese Weise lassen sich Zugspannungsspitzen beim Spleißvorgang vermeiden und die Spaltkräfte der Fixierhilfen können definiert auf die Erfordernisse verschiedenster Papierqualitäten und Splicegeometrieen eingestellt werden.

Bei der Auswahl der Trägerpapiere bzw. Folien ist zu berücksichtigen, daß für einen störungsfreien Veredelungsprozeß die Dicke der Spleiße möglichst gering ausfallen soll. Deshalb ist die max. Stärke, insbesondere Papierstärke der einzelnen Trägerbahnen vorzugsweise auf 70 g/qm zu beschränken, und die Gesamtstärke des Verbundes für die Fixierhilfe soll max. 140 g/qm nicht überschreiten. Zur Reduzierung der Dicke des Verbundes kann auf eine stärkere, naß beschichtete Träger-Bahn auch eine dünnere Papierbahn aufkaschiert werden. Eine naßfeste Ausrüstung der verwendeten Papierbahnen ist zur Vermeidung von Verspannungen zulässig, sollte aber insbesondere in einer Weise ausgeführt sein, die eine ausreichende Repulpierbarkeit unter Betriebsbedingungen noch zuläßt.

Falls bei sehr dünnen Papieren eine Naßkaschierung nicht möglich ist, können auch Schmelzkleber verwendet werden, vorzugsweise repulpierbare Materialen auf Basis Polyvinylpyrrolidon und/oder entsprechender Copolymere oder Hydroxypropylcellulose, die mit polaren Wachsen, Harzen und Trennwachsen wie z.B. Stearinsäure und bei Bedarf mit vorzugsweise wasserlöslichen Weichmachern abgemischt sind. Nachdem eine der Papierträgerbahnen mit einem derartigen Schmelzkleber beschichtet wurde, wird die zweite Bahn thermisch aufkaschiert. Die Schmelzkleber sollten möglichst hohe Erweichungsbereiche oberhalb 120°C haben, damit bei Kontakt mit heißen Trockenzylindern in der Papiermaschine möglichst keine Schmelzkleber-Partikel ("Stickies") auf diesen Flächen abgelagert werden. Da Schmelzkleber bei der Papierherstellung als potentielle Störstoffe eingestuft sind, wird diese Variante der Kaschierung nicht bevorzugt eingesetzt.

Die zusammenkaschierte Trägerbahn wird anschließend mit einer scherfesten, und vorzugsweise repulpierbaren Haftklebemasse mit Schichtstärken von bevorzugt je 15-40 g/qm beidseitig ausgerüstet und in Bahnbreiten von etwa 100 - ca. 400 mm Breite aufgeschnitten und mittels Einschießen eines beidseitig trennenden Trägermaterials, z.B. silikonisiertem Papier, zu Rollen gewickelt. Die so erhaltenen Fixierhilfen können danach auf die verschiedensten Spleißbänder aufgeklebt werden. In DE 196 28 317 A1 wird hierfür ein Beispiel mit einem einseitig haftklebrig ausgerüsteten Spleißband beschrieben. Eine Verankerung der Fixierhilfe auf dem Spleiß-Haftklebeband ist z.B. auch mit einer nur einseitig haftklebrig beschichteten Fixierhilfe möglich. Die Verklebung kann dann z.B. mit einem Leimstrich erfolgen. Die so mit der integrierten Fixierhilfe ausgerüsteten Spleißbänder können in üblicher Weise z.B. mit eingeschossenem Trennpapier als Rollenware bereitgestellt werden.

Die Sollbruchzone wird in der Regel als Adhäsionsbruch zwischen der Kaschiermasse und der aufkaschierten Papierbahn wirksam. Die Trennkraft zur Spaltung der Sollbruchzone soll beim Aufspalten der Fixierhilfe, wobei die Spalthälften beide unter einem Winkel von 90° zum Kaschierverbund mit einer Geschwindigkeit von 300 mm/min getrennt werden, vorzugsweise in einem Bereich von 3 - 40, insbesondere 5 - 35 cN/cm eingestellt sein. Die leichter spaltbaren Verbunde sind vorrangig für das Spleißen empfindlicher oder leichter Papiere vorgesehen. Für besondere Anwendungsfälle können die oben genannten Grenzen natürlich auch überschritten werden.

In Anwendungsfällen, bei denen die Repulpierbarkeit der Spleißzone nicht gefordert wird, kann die Problemlösung entsprechend vereinfacht werden. Dann können als Trägermaterialien für die integrierte Fixierhilfe auch Folien zusammenkaschiert werden, wobei als Kaschiermasse Schmelzkleber mit trennwirksamen Zusätzen, wie z.B. Trennwachsen auf Basis von Polyvinylstearylcarbamat oder Talkum etc. in Abmischgrenzen, wie sie oben genannt wurden, eingesetzt werden. Auch Bindemittel in Form von wäßrigen Dispersionen z.B. auf Basis Polyacrylat oder Poly- Butadien /Styrol mit wassermischbaren Trennmittelzusätzen sind dann geeignet.

Nachfolgend wird die Erfindung an Hand von Beispielen erläutert, ohne sie dadurch aber unnötig einschränken zu wollen.

### Beispiel 1

1.1 Polymeres Trennmittel: Styrol und Maleinsäure-mono-N-stearylamid werden im Molverhältnis 3/1 radikalisch bei 85°C in ammoniakalisch, wäßrigem Medium bei pH 9 ohne Zusatz von Emulgatoren zu einer Polymerdispersion mit 30 Gew.% Feststoff copolymerisiert.
1.2 Bindemittel: Das Stärkederivat Emsol K 55 der Firma Emslandstärke GmbH wird bei 80-85°C in Wasser zu einer homogenen Lösung mit 25 Gew. % Feststoff gelöst.
1.3 Elastifiziermittel: Polyethylenglykol 10 000 Firma Merck.

Aus den unter 1.1 -1.3 aufgeführten Bestandteilen wird eine wäßrige Zubereitung gemischt, die insgesamt 25 Gew.% Feststoff enthält und deren Feststoffanteil aus 50 Gew.% polymerem Trennmittel, 45 Gew.% Bindemittel und 5 Gew.% Elastifiziermittel besteht und als Kaschiermasse eingesetzt wird.

Ein Papierträger mit einem Flächengewicht von 40g/qm, Leinekraft 40 der Firma Hannover Papier AG, wird mit der Kaschiermasse beschichtet. Auf die nasse Beschichtung wird ein Seidenpapier mit

13g / qm Flächengewicht aufkaschiert. Danach wird der Verbund bei 120°C getrocknet und mittels Nachbefeuchtung geglättet. Die Schichtstärke der getrockneten Kaschiermasse beträgt 6,8 g / qm.

Anschließend wird der Verbund mit je 20g / qm repulpierbarer Haftklebemasse beidseitig beschichtet.

Die Prüfung der Spaltkraft in einer Zugprüfmaschine bei einer Spaltgeschwindigkeit von 300 mm/ min ergibt 25 - 33 cN / cm.

### Beispiel 2

Die Vorgehensweise wird wie im Beispiel 1 unter Fortlassen des Elastifiziermittels und Zufügen von Micro-Talcum Extra der Firma Norwegian Talc als weiterem Trennmittel wiederholt. Die trockene Kaschiermasse besteht aus 5 Gew.% polymerem Trennmittel, 40 Gew.% Bindemittel und 55 Gew.% Micro-Talkum. Bei einer Schichtstärke der Kaschiermasse von 6,5 g /qm resultiert eine Trennkraft, gemessen mit der oben genannten Methode, von 8 -15 cN/cm.

### Beispiel 3

Eine wässrige Zubereitung aus einem Feststoffanteil von 36 Gew%, der 60 Gew% Stärke (Emsol K 55 Fa Emsland-Stärke), 30 Gew.% Polyethylenglykol MG 10 000 15 Gew.% Stearylgruppen enthaltendem Copolymer gemäß Beschreibung aus Beispiel 1 und 10 Gew.% Kieselgel (Aerosil 200 Fa Degussa) enthält, wird auf eine Papierbahn (Leinekraft 40) im Rotations-Siebdruckverfahren mit einem 50-Mesh Sieb bei 20% Durchlass aufgetragen und unmittelbar nach der Beschichtung mit einer gleichen unbeschichteten Papierbahn einkaschiert und bei 120°C getrocknet. Die getrocknete Kaschiermassenmenge beträgt 6,5g/qm. Anschließend wird der Verbund, wie in Beispiel 1 beschrieben haftklebend ausgerüstet.Die Trennkraft der Kaschierung (Spaltkraft), gemessen nach der oben genannten Methode, beträgt 38 cN/cm.

## Patentansprüche

1. Verwendung einer Fixierhilfe an der Unterseite eines Splicebandes zum Ausrüsten eines Ballens für den fliegenden Rollenwechsel (flying splice), wobei
a) das Spliceband mittels der Fixierhilfe an der zweitobersten Bahn eines gewickelten Ballens angeklebt wird,
b) das Spliceband zugleich an den Anfang der obersten Bahn des gewickelten Ballens derart angeklebt wird, dass zumindest ein Teil der klebend ausgerüsteten Oberseite des Splicebandes, die der Fixierhilfe gegenüber liegt, für die verklebende Ankopplung an eine schnell laufende Bahn eines anderen, abrollenden Ballens offen liegt, wobei
c) die Fixierhilfe an der Unterseite des Splicebandes angeklebt ist
**dadurch gekennzeichnet, dass**
d) die Fixierhilfe aus einem Trägermaterial besteht, das aus zwei zusammenkaschierten flächigen Materialien gebildet ist, wobei
d1) die Kaschierung eine Sollbruchzone bildet,
d2) die Kaschierung durch eine wasserbasierte Kaschiermasse bewirkt wird, die neben einem Binder schwach trennwirksame silikonfreie Zusätze enthält,
d3) die Fixierhilfe auf ihrer Unterseite haftklebend ausgerüstet ist.

2. Verwendung nach Anspruch 1, **dadurch gekennzeichnet, dass** als Binder modifizierte Stärken verwendet werden.

3. Verwendung nach zumindest einem der Ansprüche 1 oder 2, **dadurch gekennzeichnet, dass**
als trennwirksame Zusätze Talkum, Stearylderivate, (z.B. Ca-Stearat oder Stearylgruppen tragende Polymere) oder Dispersionen von polymeren Trennmitteln (z.B. Dispersionen auf Basis von Copolymeren aus Stearylmethacrylat oder Stearylderivaten der Maleinsäure mit Styrol) eingesetzt werden.

4. Verwendung nach Anspruch 1, **dadurch gekennzeichnet, dass**
die Trennkraft zur Spaltung der Sollbruchzone beim Aufspalten der Fixierhilfe 3 bis 40 cN/cm beträgt, gemessen bei einer Trennung der Spalthälften unter einem Winkel von 90° zum Kaschierverbund mit einer Geschwindigkeit von 300 mm/min.

5. Verwendung nach Anspruch 1, **dadurch gekennzeichnet, dass**
die Trennkraft zur Spaltung der Sollbruchstelle durch eine vollflächige Kaschierung oder eine partielle, diskontinuierliche Beschichtung der Kaschiermasse durch Anzahl und/oder Größe von haftenden Arealen, wie sie mittels Siebdruck oder Tiefdruck erzeugt werden können, eingestellt wird.

6. Verwendung nach Anspruch 1, **dadurch gekennzeichnet, dass**
die flächigen Materialien der Fixierhilfe Folien oder insbesondere Papier sind, insbesondere Papier mit einem Flächengewicht von 10 bis 70 g/m².

7. Verwendung nach Anspruch 1, **dadurch gekennzeichnet, dass** die Kaschierung der flächigen Materialien mit einer Kaschiermasse erfolgt, die im getrockneten Zustand keine Haftkraft besitzt.

8. Verwendung nach Anspruch 2, **dadurch gekennzeichnet, dass**
die Kaschiermasse recycelt werden kann und auch die anderen Bestandteile des Splicebandes mit Fixierhilfe das Recycling von Papieren nicht stören, insbesondere also alle Trägermaterialien des Produktes aus Papier bestehen und die Klebemassen und die Kaschiermasse repulpierbar sind.

9. Verwendung nach Anspruch 2, **dadurch gekennzeichnet, dass**
die Kaschiermasse neben einem Binder und trennwirksamen Bestandteilen auch elastifizierende Zusätze enthält, insbesondere eine wasserbasierte Zusammensetzung enthält.

10. Verwendung nach Anspruch 2, **dadurch gekennzeichnet, dass**
die Kaschiermasse 10 bis 90 Gew.-% Bindemittel, 10 bis 90 Gew.-% Trennmittel , ggf. bis zu 60 Gew.-% Elastifiziermittel, bis zu 30 Gew.-% Füllstoffe sowie Verdickungsmittel enthält, wobei als Bindemittel insbesondere modifizierte Stärken, als Trennmittel insbesondere Talkum, Stearylderivate oder Dispersionen von polymeren silikon und fluorfreien Trennmitteln, und als Elastifiziermittel insbesondere wasserlösliche Polyglykole oder Gummi Arabicum eingesetzt werden.

11. Verwendung nach Anspruch 2, **dadurch gekennzeichnet, dass**
die Kaschiermasse nach dem Trocknen in einer Schichtstärke von 5 bis 25 g/m² vorliegt.

12. Verwendung nach Anspruch 1, **dadurch gekennzeichnet, dass**
das Spliceband mit Fixierhilfe mit einem beidseitig trennenden Trägermaterial, insbesondere silikonisiertem Papier, eingedeckt und mit diesem zur Rolle gewickelt ist.

13. Verwendung nach Anspruch 1, **dadurch gekennzeichnet, dass**
die Fixierhilfe elastisch ausgebildet ist.

14. Spliceband mit Fixierhilfe nach einem der vorstehenden Ansprüche.

## Claims

1. Use of a fixing aid on the underside of a splicing tape for equipping a reel for flying reel change (flying splice), where
a) the splicing tape is stuck using the fixing aid to the second-from-top web of a wound reel,
b) the splicing tape is also stuck to the leading edge of the topmost web of the wound reel in such a way that at least part of the adhesively equipped upper face of the splicing tape that is situated opposite to the fixing aid is open for adhesive coupling to a high-speed web of another, unrolling reel,
c) the fixing aid being stuck onto the underside of the splicing tape,
**characterized in that**
d) the fixing aid is composed of a backing material formed from two laminated sheetlike materials, where
d1) the lamination forms a predetermined breakage zone,
d2) the lamination is brought about by means of a water-based laminating composition which in addition to a binder comprises silicone-free adjuvants with weak release effect,
d3) the fixing aid has been made pressure-sensitively adhesive on its underside.

2. Use according to Claim 1, **characterized in that** modified starches are used as binder.

3. Use according to at least one of Claims 1 and 2, **characterized in that** use is made, as release-effect adjuvants, of talc, stearyl derivatives (e.g. Ca stearate or polymers which carry stearyl groups) or dispersions of polymeric release agents (e.g. dispersions based on copolymers of stearyl methacrylate or stearyl derivatives of maleic acid with styrene).

4. Use according to Claim 1, **characterized in that** the release force for cleaving the predetermined breakage zone during the cleavage of the fixing aid is 3 to 40 cN/cm, measured at a separation of the cleavage halves at an angle of 90° to the laminated assembly with a speed of 300 mm/min.

5. Use according to Claim 1, **characterized in that** the release force for cleaving the predetermined breakage zone is established by means of a full-area lamination or a partial, discontinuous coating of the laminating composition by way of the number and/or size of adhesive areas, as may be produced by means of screen printing or gravure printing.

6. Use according to Claim 1, **characterized in that** the sheetlike materials of the fixing aid are films or, in particular, paper, especially paper having a basis weight of 10 to 70 g/m².

7. Use according to Claim 1, **characterized in that** the lamination of the sheetlike materials takes place with a laminating composition which in the dried state possesses no adhesive force.

8. Use according to Claim 2, **characterized in that** the laminating composition may be recycled and also the other constituents of the splicing tape with fixing aid do not disrupt the recycling of papers, in particular, therefore, all backing materials of the product comprise paper and the adhesive compositions and laminating composition are repulpable.

9. Use according to Claim 2, **characterized in that** the laminating composition, in addition to a binder and release-active constituents, also comprises elasticating additives, and in particular comprises a water-based composition.

10. Use according to Claim 2, **characterized in that** the laminating composition comprises 10 to 90% by weight binder, 10 to 90% by weight release agent, if desired up to 60% by weight elasticating agent, up to 30% by weight fillers and also thickeners, binders used being in particular modified starches, release agents used being in particular talc, stearyl derivatives or dispersions of polymeric silicone- and fluorine-free release agents, and elasticating agents used being in particular water-soluble polyglycols or gum arabic.

11. Use according to Claim 2, **characterized in that** the laminating composition after drying is present in a film thickness of 5 to 25 g/m².

12. Use according to Claim 1, **characterized in that** the splicing tape with fixing aid is lined with a double-sidedly releasing backing material, especially siliconized paper, and is wound together with this material to form the roll.

13. Use according to Claim 1, **characterized in that** the fixing aid is of elastic configuration.

14. Splicing tape with fixing aid according to one of the preceding claims.

## Revendications

1. Utilisation d'une accessoire de fixation disposé sur le côté inférieur d'un ruban de raccordement destiné à équiper un rouleau en vue du remplacement de rouleaux à la volée ("flying splice"), dans laquelle:
a) le ruban de raccordement est collé au moyen de l'accessoire de fixation sur la deuxième bande la plus élevée d'un rouleau enroulé,
b) le ruban de raccordement est en même temps collé sur le début de la bande supérieure du rouleau enroulé de telle sorte qu'au moins une partie du côté supérieur adhésif du ruban de raccordement qui se trouve en face de l'accessoire de fixation soit prête à être accouplée à la bande en déplacement rapide d'un autre rouleau que l'on déroule,
c) l'accessoire de fixation étant collé sur le côté inférieur du ruban de raccordement,
**caractérisée en ce que**
d) l'accessoire de fixation est constitué d'un matériau de support qui est formé de deux matériaux plats contrecollés l'un sur l'autre,
d1) le contrecollage formant un emplacement de rupture,
d2) le contrecollage étant réalisé au moyen d'une pâte de contrecollage à base d'eau qui, outre un liant, contient des additifs faiblement antiadhésifs exempts de silicone et
d3) l'accessoire de fixation étant autoadhésif sur son côté inférieur.

2. Utilisation selon la revendication 1, **caractérisée en ce que** l'on utilise comme liant des amidons modifiés.

3. Utilisation selon au moins l'une quelconque des revendications 1 et 2, **caractérisée en ce que** comme additifs à effet antiadhésif, on utilise de la poudre de talc, des dérivés de stéaryle (par exemple du stéarate de Ca ou des polymères qui comportent des groupes stéaryle) ou des dispersions de polymères antiadhésifs (par exemple des dispersions à base de copolymères de méthacrylate de stéaryle ou de dérivés de l'acide stéarylmaléique qui contiennent du styrène).

4. Utilisation selon la revendication 1, **caractérisée en ce que**, mesurée dans le cas d'une séparation à une vitesse de 300 mm/min des moitiés de fendage et à un angle de 90° par rapport au composite de contrecollage, la force nécessaire au fendage de la zone de rupture est comprise entre 3 et 40 cN/cm lors du fendage de l'accessoire de fixation.

5. Utilisation selon la revendication 1, **caractérisée en ce que** la force nécessaire au fendage de l'emplacement de rupture est réglée au moyen d'un contrecollage sur toute la surface ou au moyen d'une application partielle et discontinue de la pâte de contrecollage par l'intermédiaire du nombre et/ou de la taille des zones adhésives produites par sérigraphie ou par rotogravure.

6. Utilisation selon la revendication 1, **caractérisée en ce que** les matériaux plats de l'accessoire de fixation sont des films ou en particulier du papier, en particulier du papier qui présente un poids par unité de surface de 10 à 70 g/m².

7. Utilisation selon la revendication 1, **caractérisée en ce que** le contrecollage des matériaux plats est exécuté au moyen d'une pâte de contrecollage qui n'est pas adhésive quand elle est sèche.

8. Utilisation selon la revendication 2, **caractérisée en ce que** la pâte de contrecollage peut être recyclée, **en ce que** les autres composants du ruban de raccordement qui présentent des accessoires de fixation ne perturbent pas davantage le recyclage de papiers et **en ce que** tous les matériaux de support du produit sont donc en particulier en papier, les pâtes adhésives et la pâte de contrecollage étant repulpables.

9. Utilisation selon la revendication 2, **caractérisée en ce qu'**outre un liant et des composants à effet antiadhésif, la pâte de contrecollage contient également des additifs d'élastification et en particulier une composition à base d'eau.

10. Utilisation selon la revendication 2, **caractérisée en ce que** la pâte de contrecollage contient entre 10 et 90% en poids de liant, entre 10 et 90% en poids d'agent antiadhésif, éventuellement jusque 60% en poids d'agent d'élastification, jusque 30% en poids de charges et d'agents épaississants, le liant étant en particulier sélectionné parmi les amidons modifiés, l'agent antiadhésif étant en particulier sélectionné parmi la poudre de talc, des dérivés de stéaryle ou des dispersions d'agents antiadhésifs polymères sans silicone et sans fluor, l'agent d'élastification étant en particulier des polyglycols solubles dans l'eau ou de la gomme arabique.

11. Utilisation selon la revendication 2, **caractérisée en ce qu'**après séchage, la pâte de contrecollage présente une épaisseur de couche comprise entre 5 et 25 g/m².

12. Utilisation selon la revendication 1, **caractérisée en ce que** le ruban de raccordement qui présente l'accessoire de fixation est recouvert d'un matériau de support antiadhésif sur ses deux faces et est en particulier recouvert de papier siliconé, et est enroulé avec celui-ci pour former un rouleau.

13. Utilisation selon la revendication 1, **caractérisée en ce que** l'accessoire de fixation a une configuration élastique.

14. Ruban de raccordement qui présente un accessoire de fixation selon l'une quelconque des revendications précédentes.
